Europäisches Patentamt

European Patent Office

Office européen des brevets

(19)

(11) Veröffentlichungsnummer: **0 316 503 B1**

(12) **EUROPÄISCHE PATENTSCHRIFT**

(45) Veröffentlichungstag der Patentschrift: **04.03.92**

(51) Int. Cl.⁵: **B60P 1/44**

(21) Anmeldenummer: **87890263.4**

(22) Anmeldetag: **20.11.87**

(54) **Hub- und Schwenkvorrichtung für Ladebordwände von Lastfahrzeugen.**

(43) Veröffentlichungstag der Anmeldung:
**24.05.89 Patentblatt 89/21**

(45) Bekanntmachung des Hinweises auf die
Patenterteilung:
**04.03.92 Patentblatt 92/10**

(84) Benannte Vertragsstaaten:
**FR GB IT NL SE**

(56) Entgegenhaltungen:
**DE-A- 3 228 765**
**LU-A- 57 657**

(73) Patentinhaber: **Weber, Günter**
**Hauptplatz 23**
**A-2474 Gattendorf(AT)**

(72) Erfinder: **Weber, Günter**
**Hauptplatz 23**
**A-2474 Gattendorf(AT)**

(74) Vertreter: **Holzer, Walter, Dipl.-Ing. et al**
**Patentanwälte, Dipl.-Ing. Dr. techn. Schütz**
**Alfred, Dipl.-Ing. Holzer Walter, Dipl.-Ing.**
**Pfeifer Otto, Fleischmanngasse 9**
**A-1040 Wien(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Hub- und Schwenkvorrichtung für Ladebordwände od.dgl. von Lastfahrzeugen, mit einem am Fahrzeug montierbaren Träger für die Schwenklagerung eines an der Ladebordwand angreifenden Hubarmes, eines an der Ladebordwand mit Abstand von der Hubarmanlenkung angreifenden Parallelogrammlenkers und eines am freien Ende des Hubarmes angreifenden Druckmittel-Hubzylinders, wie z.B. aus DE-A-3 228 765 bekannt.

Die Erfindung zielt darauf ab, eine Vorrichtung dieser Art dahingehend zu verbessern, daß sie auf einfache Weise und mit geringen Kosten an Lastfahrzeuge mit unterschiedlich hohen und/oder langen Ladeplattformen angepaßt werden kann.

Diese Aufgabe wird erfindungsgemäß dadurch gelöst, daß am freien Ende des Hubarmes ein abgewinkelter Schwenkarm austauschbar angelenkt ist, der mit der Ladebordwand schwenkbar verbunden ist und aus einer Stellung, in welcher er sich während des Hubvorganges mit einem Schenkel am freien Ende des Hubarmes abstützt, beim Aufsetzen der Ladebordwand auf den Boden unter dem Gewicht derselben in eine vom Hubarm weggeschwenkte Stellung bewegbar ist.

Diese Ausbildung ermöglicht es, bei ansonsten unveränderter Hub- und Schwenkvorrichtung nur durch Austauschen des Schwenkarmes gegen einen anderen Schwenkarm unterschiedlicher Größe und/oder Form eine Anpassung an unterschiedlich hohe und/oder lange Ladeplattformen vorzunehmen. Dazu brauchen lediglich die Anlenkbolzen des Schwenkarmes entfernt zu werden und es ist nicht erforderlich, die komplizierte Anlenkung des Hubarmes selbst zu lösen und den Hubarm auszutauschen, der ein aufwendiger Bauteil ist.

Die Erfindung wird nachfolgend an einem Ausführungsbeispiel unter Bezugnahme auf die Zeichnungen näher erläutert, in welchen

Fig. 1 eine Vorrichtung gemäß der Erfindung schematisch in einer Seitenansicht und

Fig. 2 Ausführungsbeispiele der Vorrichtung nach Fig. 1 im Detail zeigt.

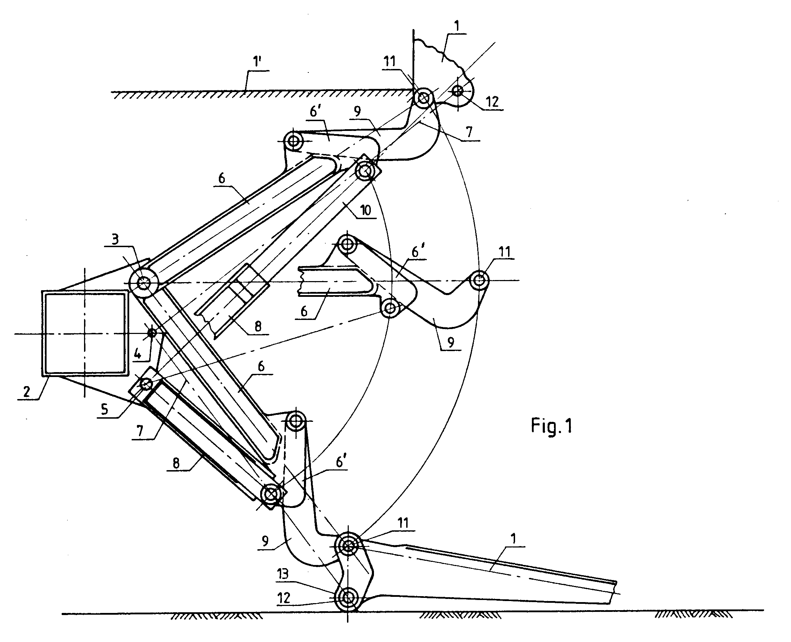

Die in Fig. 1 gezeigte Vorrichtung, die in drei verschiedenen Betriebsstellungen dargestellt ist, ist an beiden Seiten einer Ladebordwand 1 eines Lastfahrzeuges mit Ladeplattform 1' vorgesehen und weist einen am Fahrzeug verankerten, sich quer zur Fahrzeuglängsachse erstreckenden Träger 2 aus einem Hohlprofil auf. Dieser Träger 2 hat drei Anlenkpunkte 3, 4, 5 für einen Hubarm 6, einen im einzelnen nicht dargestellten Parallelogrammlenker 7 und einen Druckmittel-Hubzylinder 8. Am Hubarm 6, der z.B. Doppel-T-förmiges Profil hat, sind einerseits ein abgewinkelter und gekröpfter Schwenkarm 9 und anderseits die Betätigungsstange 10 des Hubzylinders 8 angelenkt. Die Anlenkstelle des Schwenkarmes liegt mit Abstand oberhalb der Längsmitte des Hubarmes, während der Hubzylinder am freien Ende des Hubarmes angreift. In der oberen Endstellung und während des Hubvorganges liegt der Schwenkarm 9 mit seinem mittleren Schenkel am Hubarm 6 an. Am freien Ende des Schwenkarmes 9 ist die Ladebordwand 1 bei 11 angelenkt. Die Ladebordwand 1 ist ferner bei 12 am Parallelogrammlenker 7 angelenkt. Die Anlenkstellen 3, 4, 11, 12 sind die vier Punkte eines Gelenkparallelogramms, mit welchem die Ladebordwand 1 beim Heben und Senken derselben geführt ist.

Während des Absenkens der Ladebordwand 1 bleibt der Schwenkarm 9 in Anlage am Hubarm 6. Die Ladebordwand 1 wird durch den Parallelogrammlenker 7 in horizontaler Lage gehalten. Bei Erreichen der unteren Endstellung setzt die Ladebordwand 1 zunächst mit einem die Anlenkstelle 12 enthaltenden hinteren Ansatz 13 auf den Boden auf. Dadurch wird der Hubzylinder 8 drucklos. In der Folge senkt sich die Ladebordwand 1 unter dem Eigengewicht weiter ab, bis sie mit ihrem vorderen Ende den Boden berührt (untere Stellung in Fig. 1), wobei der Schwenkarm 9 vom Hubarm 8 wegschwenkt. Die Ladebordwand 1 bildet nun eine Auffahrrampe.

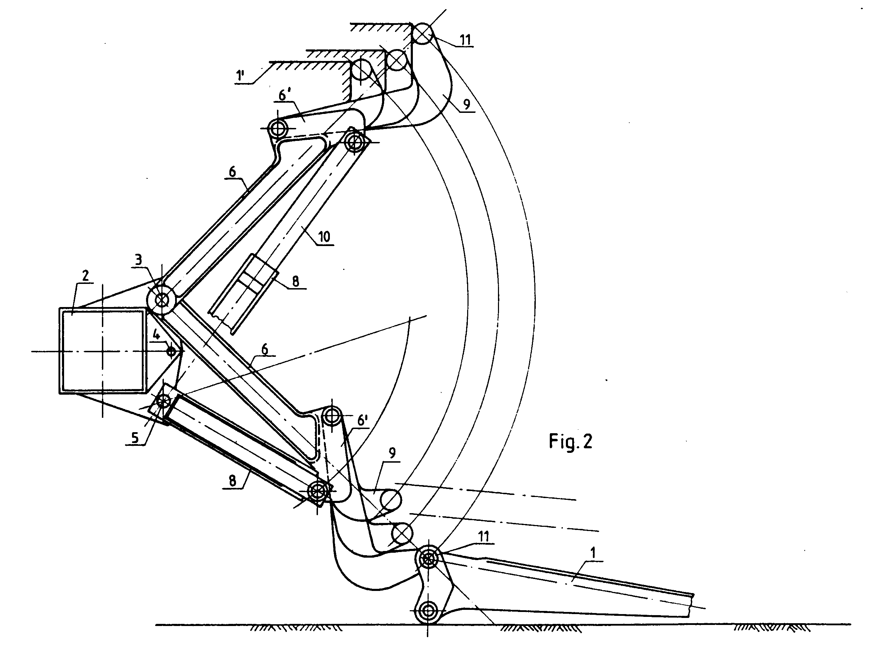

Wie Fig. 2 der Zeichnungen in drei Alternativen zeigt, ermöglicht die erfindungsgemäße Konstruktion, d.h. die Kombination aus Hubarm 6 und Schwenkarm 9, daß ein und dieselbe Hubvorrichtung, bestehend aus Hubarm, Parallelogrammlenker und Hubzylinder, mit Schwenkarmen unterschiedlicher Größe ausgestattet werden kann, die unterschiedlichen Ladeplattformhöhen und -abmessungen angepaßt sind.

## Patentansprüche

1. Hub- und Schwenkvorrichtung für Ladebordwände od.dgl. von Lastfahrzeugen, mit einem am Fahrzeug montierbaren Träger für die Schwenklagerung eines an der Ladebordwand angreifenden Hubarmes, eines an der Ladebordwand mit Abstand von der Hubarmanlenkung angreifenden Parallelogrammlenkers und eines am freien Ende des Hubarmes angreifenden Druckmittel-Hubzylinders, dadurch gekennzeichnet, daß am freien Ende des Hubarmes (6) ein abgewinkelter Schwenkarm (9) austauschbar angelenkt ist, der mit der Ladebordwand (1) schwenkbar verbunden ist und aus einer Stellung, in welcher er sich während des Hubvorganges mit einem Schenkel am freien Ende (6') des Hubarmes (6) abstützt, beim Aufsetzen der Ladebordwand auf den Boden unter dem Gewicht derselben in eine vom Hubarm weggeschwenkte Stellung bewegbar ist.

**2.** Vorrichtung nach Anspruch 1, dadurch gekennzeichnet, daß der Schwenkarm (9) einen der Ladebordwand (1) abgekehrten gekröpften Endabschnitt aufweist, der zwischen den Hubarmenden oberhalb der gedachten Linie zwischen der Anlenkstelle des Hubarmes (6) am Träger (2) und der Anlenkstelle des Schwenkarmes an der Ladebordwand (1) liegt.

## Claims

**1.** Lifting and pivoting device for loading boards or the like of goods vehicles, having a bracket, fitted to the vehicle, for the pivotal mounting of a lifting arm acting upon the loading board, of a parallelogram guide acting at a distance from the lifting arm guidance upon the loading board and of a pressure-medium lifting cylinder acting upon the free end of the lifting arm, characterised in that exchangeably linked to the free end of the lifting arm (6) there is an angular pivoting arm (9), which is pivotally connected to the loading board (1) and which, from a position in which it rests during the lifting operation with a leg against the free end (6') of the lifting arm (6), is movable, upon the loading board being placed onto the ground, under the weight of this board, into a position pivoted away from the lifting arm.

**2.** Device according to Claim 1, characterised in that the pivoting arm (9) has a cranked end section, facing away from the loading board (1), which end section lies between the ends of the lifting arm above the imaginary line between the linking point of the lifting arm (6) to the bracket (2) and the linking point of the pivoting arm to the loading board (1).

## Revendications

**1.** Dispositif de levage et de pivotement pour des plates-formes de chargement, ou similaires, de camions, comportant un support monté sur le véhicule pour supporter de façon pivotante un bras de levage agissant sur la plate-forme, un parallélogramme articulé agissant sur la plate-forme à quelque distance de l'articulation du bras de levage et un vérin agissant sur l'extrémité libre du bras de levage, caractérisé en ce que sur l'extrémité libre du bras de levage (6) est articulé de façon remplaçable un bras pivotant coudé (9) qui est relié de façon pivotante à la plate-forme de chargement (1) et qui, à partir d'une position dans laquelle il porte contre l'extrémité libre (6') du bras de levage (6) pendant l'opération de levage peut être amené dans une position de pivotement éloignée du bras de levage, lorsque la plate-forme de chargement vient reposer sur le sol sous l'effet de son propre poids,.

**2.** Dispositif selon la revendication 1, caractérisé en ce que le bras pivotant (9) présente une section d'extrémité qui est coudée dans une direction opposée à la plate-forme de chargement (1) et qui est située, entre les extrémités du bras de levage au-dessus de la ligne imaginaire reliant l'articulation du bras de levage (6) sur le support (2) et l'articulation du bras pivotant sur la plate-forme de chargement (1).

Fig. 1

EP 0 316 503 B1

Fig. 2

EP 0 316 503 B1